# EUROPEAN PATENT SPECIFICATION

(11) **EP 1 004 505 B1**
(45) Date of publication and mention of the grant of the patent: **09.01.2008**
(21) Application number: 99123084.8
(22) Date of filing: 22.11.1999
(51) Int. Cl.: B62M 23/02, B62K 13/00, B62K 15/00, B62M 7/12, B62K 11/10

(54) **Electric drive multifunctional vehicle**
Elektrisch angetriebenes Mehrzweckfahrzeug
Véhicule multifonctionel à entraînement électrique

(30) Priority: 23.11.1998 IT MI982524
(43) Date of publication of application: 31.05.2000
(73) Proprietor: Oral Engineering S.r.l., 41041 Baggiovara (Modena) (IT)
(72) Inventor: Forghieri, Mauro, 41010 Magreta di Formigine (Modena) (IT)
(74) Representative: Gervasi, Gemma

(56) References cited:
- WO-A-98/46474
- DE-U- 29 610 975
- GB-A- 790 673
- GB-A- 2 279 921
- GB-A- 2 335 895

## Description

### Field of the Invention

The invention is an electric two wheel drive multifunctional vehicle, whose chassis can be folded to transform the vehicle from a motorcycle to a motorised package carrier trolley

Furthermore, it is possible to fold the motorcycle version of the multifunctional vehicle and reduce the overall dimensions to those of a suitcase.

### Prior Art

The two wheel engine vehicles (motorcycles) are being used more and more for people travelling «short distances», that is for limited distances (preferably but not necessarily in city areas and/or nearby). These motorcycles are generally operated by an internal combustion engine (normally two strokes) which transmits (technology known to all) power to one of the wheels.

These internal combustion engines are notoriously pollutant and very noisy and allow a motion speed which should not be too high (in Italy it cannot be over 50 Km/h), but a motion speed proved to be sufficient to satisfy the normal needs for people moving «short distances» . Given that they are easy to drive and the possibility to move quickly in city traffic explains and justifies the ever increasing commercial success of these motorcycles, even if penalised by a very limited ,in effect, null carrying capacity .

Motorcycles with chassis designed to be (more or less) easily folded to reduce the dimensions (when not used) so transporting them on another vehicle is easier, for example in the trunk of a car, are well known from a technological point of view as well as commercially .

In folding motorcycles the engine is normally strictly associated to the wheel to which it transmits motion, with which it is moved when the motorcycle is folded to reduce its dimensions.

Hand operated trolleys, for baggage transport and/or for moving other types of packages, which can be folded to reduce the dimensions when not in use are well known from a technological viewpoint as well as commercially.

As these trolleys are not operated by an engine, they require that (or can require) the user to exert a notable effort to move it.

From GB 2 270 053 A it is known a battery powered bicycle which has a removable battery cassette in order to facilitate its recharging, and a foldable chassis for ease of handling.

Although this kind of vehicle shows its main advantages of being substantially free of pollution being electric powered, and at the same time a small volume when packed for ease of handling, the same has a main drawback due to the fact that when folded a considerable effort is required to the user for the handling thereof.

The multifunctional vehicle in question is able to eliminate the disadvantages of the motorcycles and trolleys known on the market. It is in fact an electric drive vehicle (therefore free of any of the chemical pollution and acoustic problems connected to an internal combustion engine) whose chassis can be folded and transformed from a motorcycle to a motorised package carrier trolley (able to be moved without any effort by the user) and viceversa.

Moreover, it is also possible to fold the motorcycle version of the multifunctional vehicle and to reduce the dimensions to those of a suitcase.

### Summary of the invention

Object of the present invention is an electric drive multifunctional vehicle, whose chassis is able to be folded to transform the vehicle from a motorcycle to a motorised package carrier trolley and vice-versa.

Moreover, it is possible to fold the motorcycle version of the multifunctional vehicle and reduce its dimensions to those of a suitcase.

### List of the figures

The invention will now be better described referring to a non-limiting example shown in the attached drawings, where :
- figure 1 shows a lateral view of the motorcycle of the invention;
- figures 2 and 3 show respectively a lateral view and top view showing the first phase of the transformation process of the motorcycle of figure 1 to a motorised package carrier trolley ;
- figures 4 and 5 show respectively a lateral view and a top view showing the second phase of the transformation process of the motorcycle of figure 1 to a motorised package carrier trolley ;
- figures 6 and 7 show respectively the lateral view and top view of the motorised package carrier trolley obtained from the motorcycle in figure 1 ;
- figures 8 and 9 show respectively the lateral view and top view of the motorcycle in figure 1 folded to be put inside a suitcase, indicated in figures 8 and 9 with a dotted line.

In the attached drawings , the corresponding parts will be identified using the same numerical references.

### Detailed description

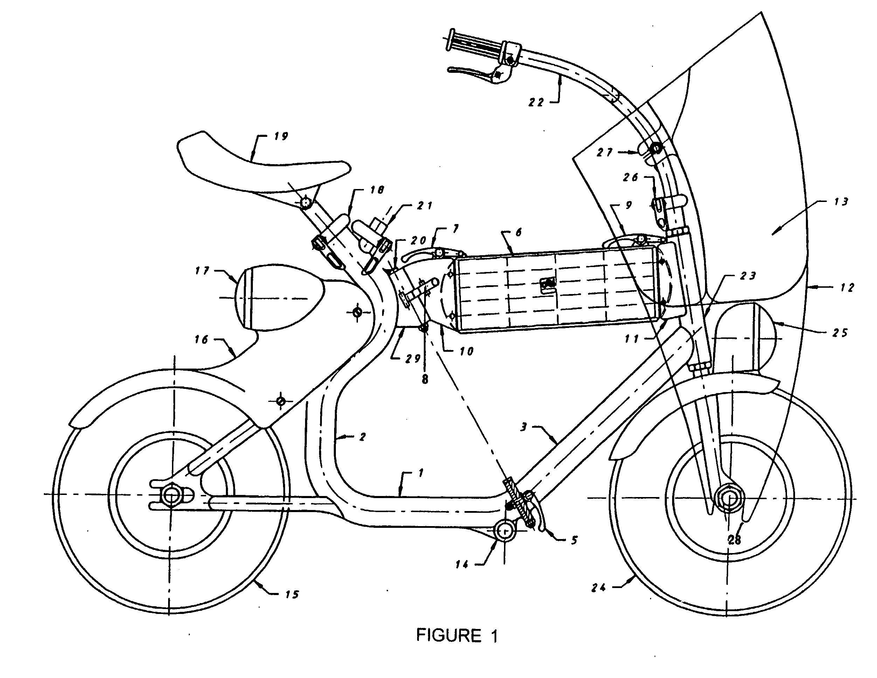

Figure 1 shows a lateral view of the electric drive motorcycle, made as per the invention, whose chassis 1 is able to be folded and transformed into a motorised package carrier trolley.

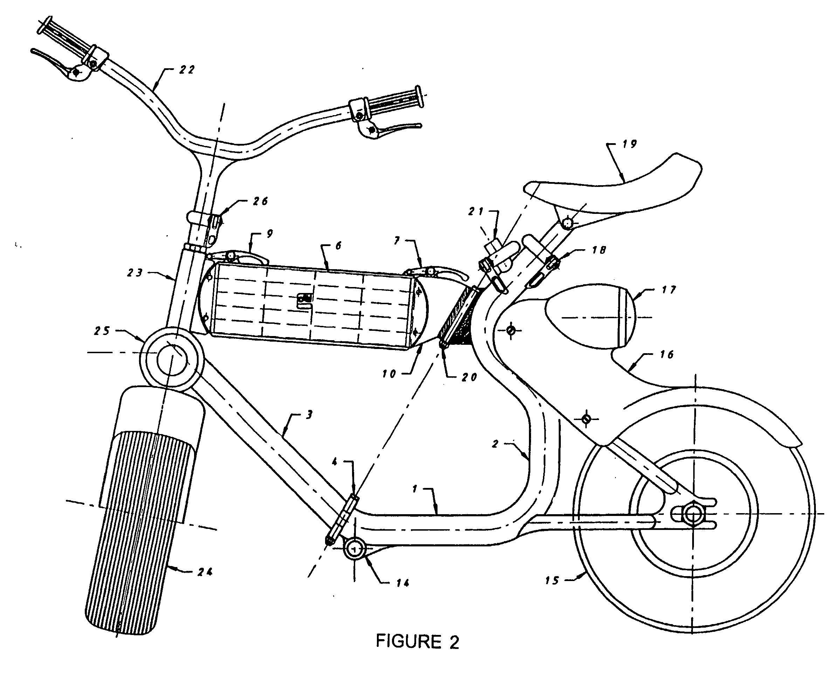

In figure 1 you can see :
- the chassis 1, made by a first and a second part (2, respectively 3) connected by the hinge 4 (figure 2) and kept united by reversible fastening parts 5 made, for example, by a bolt with a handle or by another functionally equivalent fastening object;
- the rear wheel 15 moved from the first part 2 of the chassis 1 and the front wheel 24 moved from the second 3 of the chassis 1 ;
- the battery pack 6, fastened using fastening means 7 and 9 (preferably but not necessarily a snap type) to a body 10 hinged (through hinge 20, aligned to hinge 4 ; figure 2) to the first part 2 of the chassis 1, respectively to a body 11 integral with the second part 3 of the chassis 1 : the reversible fastening means 7 and 9 permit the quick and easy removable and replacement of the battery pack 6 ;
- the fairing 16, carried by the first part 2 of the chassis 1, inside which there is the electronic controls of an electric engine put (preferably but not necessarily) in the rear wheel hub 15 and fed by the battery pack 6; the rear fender is also integral with the fairing 16 ;
- the handlebar 22, fixed in a reversible way to the tube 23 of the front wheel 24, belonging to the second part 3 of the chassis 1 ;
- the seat 19, is sustained by the first part 2 of the chassis 1 ;
- the container 12, put in the front part of the motorcycle and fixed in a reversible way to the handlebar 22 and in connection with the front wheel 24 axle, which protects the passenger from air flow and optimises the aerodynamic characteristic of the motorcycle, important also at low speeds (about 20 Km/h) to optimise the performance of the motorcycle itself ; the container 12 includes areas 28 with overturned «U» configuration and presents an internal space 13 that can be used as loading space.

Preferably but not necessarily the battery pack 6 enables the motorcycle to have a fuel distance of about 30 Km (plus another 30 Km given by an extra battery pack stored, if present , in the container 12) corresponding to about 1.6 hours at cruising speed of about 18 Km/h with a maximum speed of about 25 Km/h.

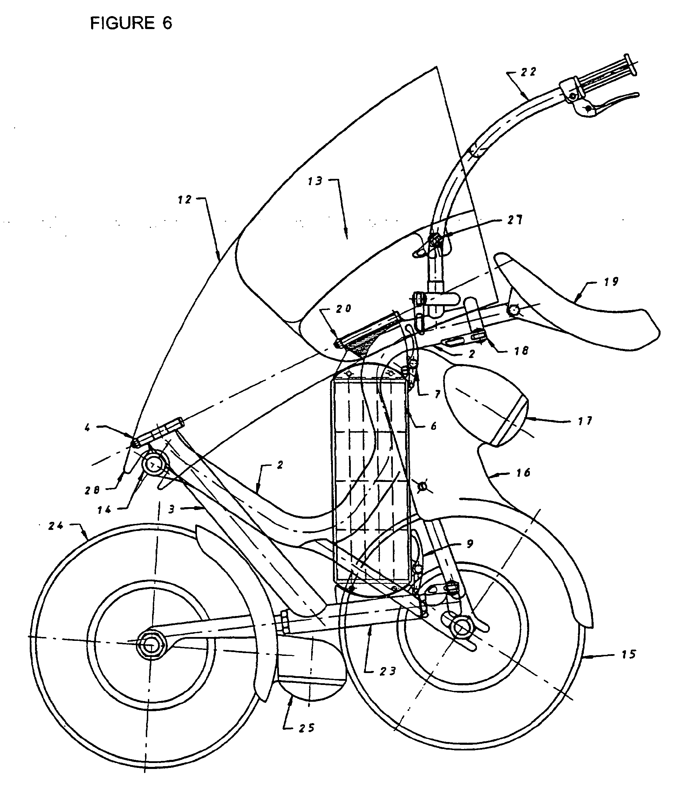

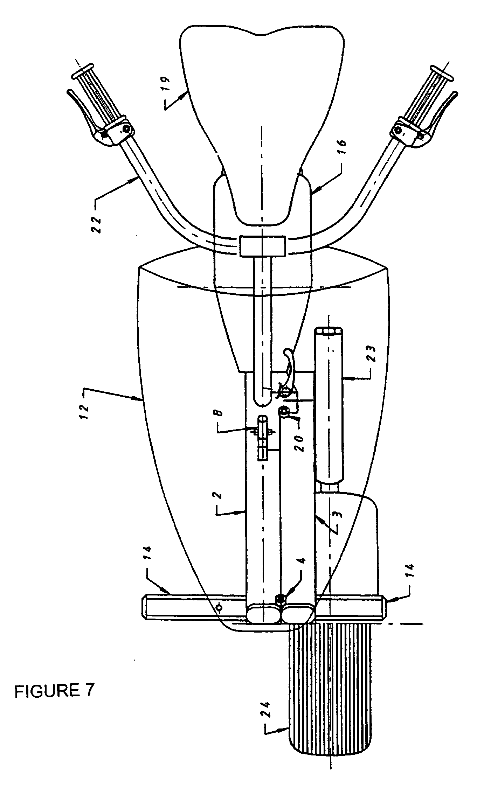

The first part 2 of the chassis 1 has the footrests 14 (only one of them can be seen in figure 1) ; the supports of the rear wheel 15 ; the rear light 17 carried by the fairing 16 ; fastening and regulation means 18 of the seat tube 19; the support 29 to which it is connected through the hinge 20 (figure 2) the body 10 ; reversible fastening means 8 (preferably but not necessarily of snap type) which connect the body 10 to the support 29 and a support 21 able to carry the handlebar 22 following the transformation into an package carrier trolley, as it will be shown in figures 6 and 7.

The second part 3 of the chassis 1 carries the front light 25 and the front fender connected to the tube 23 which carries the fork of the front wheel 24 ; the body 11 where the battery pack is fastened using the reversible means 9 ; fastening and handlebar regulation parts 26 and reversible fastening means 27 of the container 12 to the handlebar 22 (preferably but not necessarily of snap type) which operate in connection with the areas 28 of the container 12 with overturned «U» configuration and mounted in connection with the front wheel 24 axle.

In the attached drawings , to simplify the graphic representation and because they are not pertaining to the present invention, other electric and/or mechanic elements as for example the braking system, the parts which electrically connect the battery pack 6 to the electric engine, the transmission means which connect the electric engine to the rear wheel 15, the control parts located on the handlebar 22 and the means which connect them with the main elements (engine, brakes, lights, etc) of the motorcycle etc have been omitted.

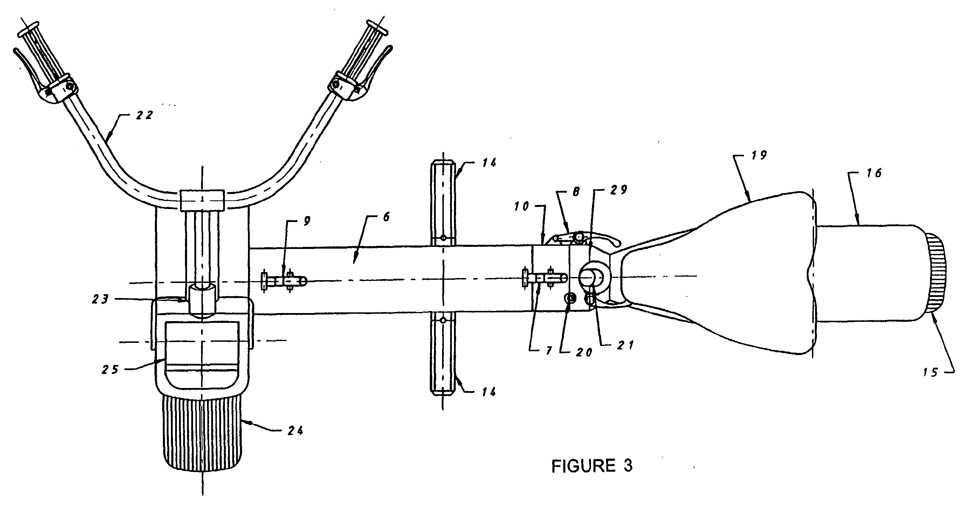

Figures 2 and 3 show respectively a lateral and top view which show a first phase of the transformation process of the motorcycle in figure 1 to a motorised package carrier trolley (figures 6 and 7) : the container 12 has been removed and the handlebar 22 and the front wheel 24 have been rotated by 90° in an anticlockwise direction.

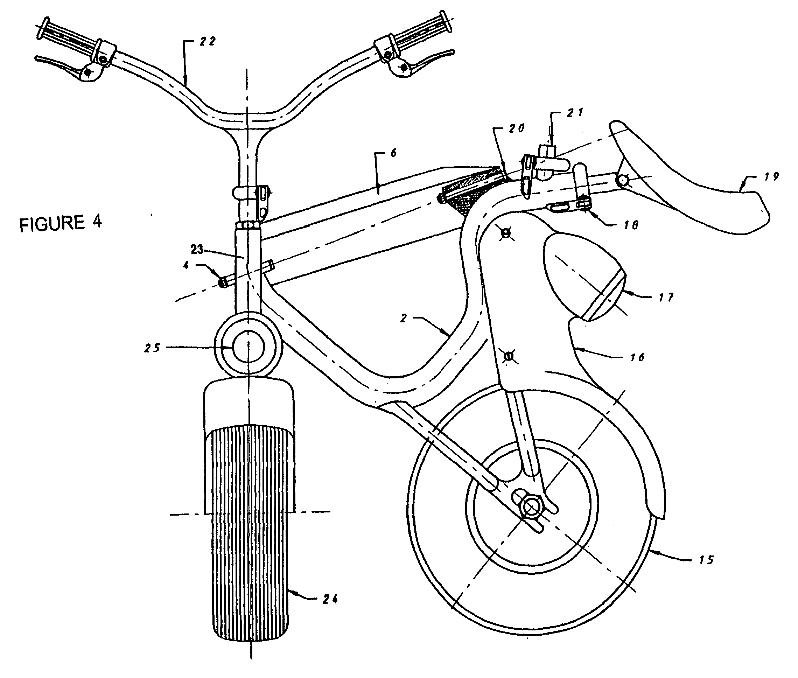

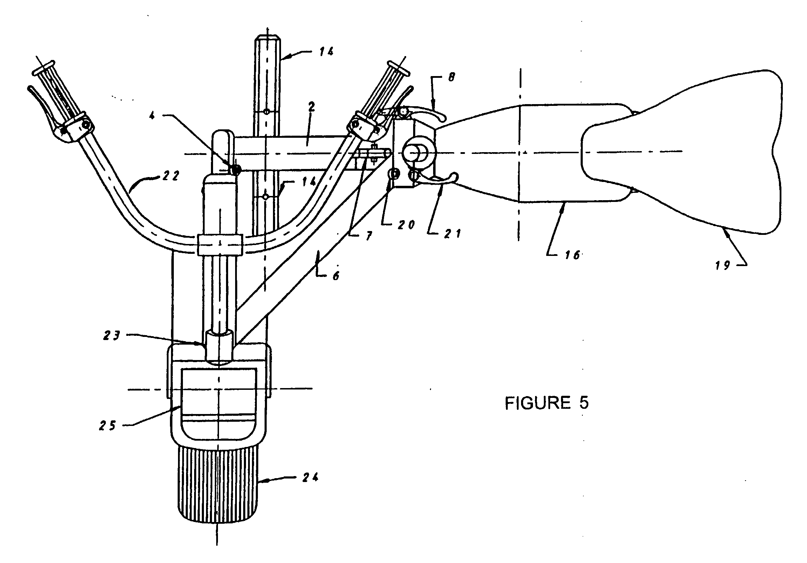

Figures 4 and 5 show respectively a lateral and top view showing a second phase of the transformation process of the motorcycle of figure 1 to a motorised package carrier trolley (figures 6 and 7) : after having opened the reversible fastening means 5 and 8, the first part 2 of the chassis 1 is rotated by 90° in relation to the second part 3 of the chassis 1 by rotating it on the hinges 4 and 20.

Subsequently the first part 2 of the chassis 1 is folded on the second part 3 of the chassis 1 by rotating it further by 90° on the hinge 4 ; the handlebar 22 (moved away from the tube 23 of the front wheel 24 loosening the fastening and regulation means 26) is fixed to the support 21 belonging to the second part 3 of the chassis 1 ; the container 12 is put back into place again mounting the areas 28 of the container 12 with overturned «U» configuration connected with the footrests 14 and fastening the container 12 to the handlebar 22 using the reversible fastening means 27 (figure 1).

Figures 6 and 7 show respectively a lateral and top view of the motorised package carrier trolley obtained from the motorcycle in figure 1 through the transformation process previously described.

In figures 6 and 7 You can see :
- the two parts (2, 3) of the chassis 1 folded by a rotation of 180° on the hinge 4, so that the two wheels 15 and 24 are parallel to each other ;
- the battery pack 6, fastened by reversible fastening means 7 and 9 to the body 10 (figure 1) rotated by 180° with respect to the position of figure 1 by a rotation on the hinge 20, respectively to the body 11 (figure 1) integral to the second part 3 of the chassis 1, to which it is fixed in a reversible way.
- the handlebar 22, fixed in a reversible way to the support 21 (figure 1) of the first part 2 of the chassis 1 ;
- the container 12, showing the internal space 13 to be used as loading space, fixed in a reversible way to the chassis 1 mounting its areas 28 (with a overturned «U» configuration) connected with the footrests 14 and fastening the container 12 to the handlebar 22 using reversible fastening means 27.

To convert the package carrier trolley of figures 6 and 7 into the motorcycle of figure 1, all that is necessary is to carry out the phases of the transformation process previously described in the opposite order.

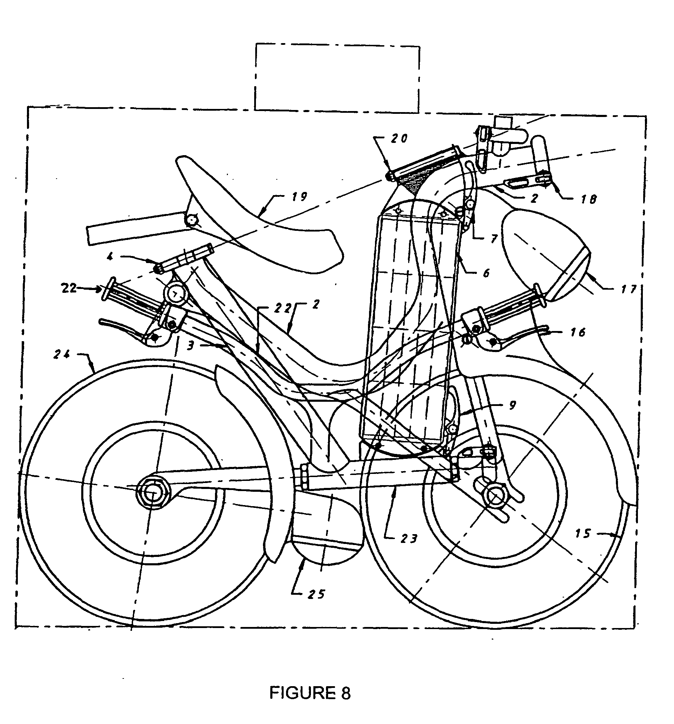

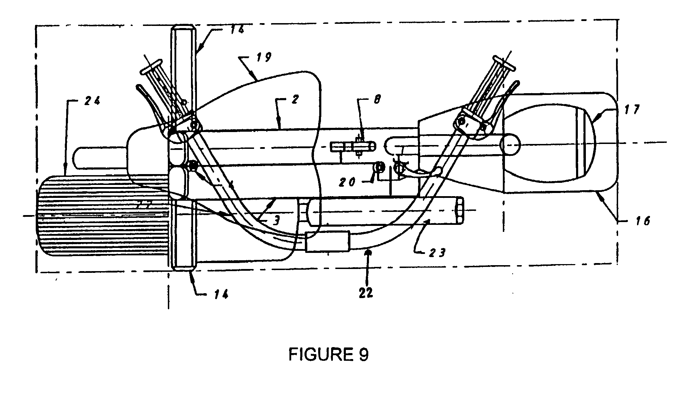

Figures 8 and 9 show respectively a lateral and top view of the motorcycle in figure 1 folded to be put inside a suitcase, indicated in figures 8 and 9 with a dotted line.

The order of the functional steps made to fold the motorcycle of figure 1 is substantially the same as the one previously described. It differs only because the container 12 (moved at the beginning of the transformation process) is not put back in its place and the seat 19 and the handlebar 22 are moved loosening the fastening and regulation means 18, respectively 26 to be put inside the suitcase. Without going out from the invention scope as defined by the appended claims, all the modifications and improvements, suggested by normal experience and the natural technical evolution can be carried out by a man skilled in the art to the electric drive multifunctional vehicle object of the present description.

## Claims

1. Multifunctional vehicle comprising an electric drive and a chassis (1) which is able to be folded to transform the multifunctional vehicle from a motorcycle to a motorised package carrier trolley,
**characterised by** the fact to include at least and , combined to each other:
the chassis (1), made by a first and a second part (2, 3) connected to each other by a first hinge (4) and kept united by first reversible fastening means (5);
a rear wheel (15) carried by the first part (2) of the chassis (1) and a front wheel (24) carried by the second part (3) of the chassis (1) ;
a battery pack (6), fixed by second and third reversible means (7, 9) to a first body (10) connected by a second hinge (20) to the first part (2) of the chassis (1), respectively to a second body (11) connected with the second part (3) of the chassis (1) ;
one fairing (16), carried by the first part (2) of the chassis (1), inside which the control means of an electric engine are placed , fed by the battery pack (6), which
controls the rear wheel (15) ;
a handlebar (22), fixed in a reversible way to the chassis (1) ;
a seat(19), held up by the first part (2) of the chassis (1) ;
a container (12), including some areas (28) with overturned «U» configuration and
having an internal space (13), able to be fastened in a reversible way to at least
the handlebar (22).

2. Vehicle according to claim 1 **characterised by** the fact that the electric engine is in the rear wheel hub (15).

3. Vehicle according to claim 1 **characterised by** the fact that the second hinge (20) is aligned with the first hinge (4).

4. Vehicle according to claim 1 **characterised by** the fact that the battery pack (6) gives to the motorcycle an autonomy of about 30 Km and a cruising speed of about 18 Km/h with a maximum speed of about 25 Km/h.

5. Vehicle according to claim 1 **characterised by** the fact to include a battery pack put into the container (12) and able to give the motorcycle a fuel distance of about 30 Km.

6. Vehicle according to claim 1 **characterised by** the fact that the first part (5) of the chassis (1) holds up the footrests (14) ; the supports of the rear wheel (15); first fastening and regulating means (18) of the seat tube (19); a first support (29) to which the first body (10) is connected by the second hinge (20) ; fourth reversible fastening means (8) which connect the first body (10) to the first support (29) and a second support (21) able to hold up the handlebar (22) at the end of the transformation of the motorcycle into a package carrier trolley

7. Vehicle according to claim 6 **characterised by** the fact that the first part (2) of the chassis (1) carries also the rear light (17) mounted on the fairing (16).

8. Vehicle according to claim 1 **characterised by** the fact that the second part (3) of the chassis (1) carries the tube (23) which carries the front wheel (24) forks ; the second body (11) to which the battery pack (6) is fastened using third reversible fastening means (9) ; second fastening and regulation means (26) of the handlebar (22) and fifth reversible fastening means (27) of the container (12) to the handlebar (22).

9. Vehicle according to claim 8 **characterised by** the fact that the second part (3) of the chassis (1) carries also the front light (25) connected to the tube (23) of the front wheel (24).

10. Vehicle according to claims 1 and 8 **characterised by** the fact that, when it is a motorcycle :
the handlebar (22) is fixed in reversible way to the tube (23) of the front wheel (24) of the second part (3) of the chassis (1);
- the areas (28) with overturned «U» configuration of the container (12) are mounted connected with the front wheel (24) axle.

11. Vehicle according to claims 1 and 6 **characterised by** the fact that, when it is a package carrier trolley :
the handlebar (22) is fixed in reversible way to the second support (21) of the first part (2) of the chassis (1) ;
the areas (28) with overturned «U» configuration of the container (12) are mounted on the footrests (14).

12. Vehicle according to any of the previous claims, **characterised by** the fact that it is transformed from a motorcycle to a motorised package carrier trolley by at least the following functional steps :
remove the container (12) and rotate the handlebar (22) and the front wheel (24) by 90°;
open the first and fourth reversible fixing means (5, 8), rotate by 90° the first part (2) of the chassis (1) with respect to the second part (3) of the chassis (1) by means of a rotation on the first and the second hinge (4, 20);
fold the first part (2) of the chassis (1) on the second part (3) of the chassis (1) by a further rotation of 90° on the first hinge (4);
remove the handlebar (22) from the tube (23) of the front wheel (24) by loosening the second fastening and regulation means (26) and fasten it to the second support (21) of the second part (3) of the chassis (1) ;
put the container (12) back in its place again, mounting on the footrests (14) its areas (28) with overturned «U» configuration and fastening it to the handlebar (22) using fifth reversible fastening means (27).

13. Vehicle according to claim 1, **characterised by** the fact that its chassis (1) is able to be opened to convert the package carrier into a motorcycle carrying out in the opposite order the functional steps as per claim 12.

14. Vehicle according to any of the previous claims, **characterised by** the fact that in the motorcycle version, it is folded to reduce its dimensions to that of a suitcase carrying out at least the following functional steps :
remove the container (12) and rotate the handlebar (22) and the front wheel (24) by 90°;
open the first and fourth reversible fixing means (5, 8), rotate by 90° the first part (2) of the chassis (1) with respect to the second part (3) of the chassis (1) by a rotation on the first and the second hinge (4, 20) ;
fold the first part (2) of the chassis (1) on the second part (3) of the chassis (1) by a further rotation of 90° on the first hinge (4) ;
remove the handlebar (22) from the tube (23) of the front wheel (24) loosening the second fastening and regulation means (26) ;
remove the seat (19) from the first part (2) of the chassis (1) by loosening the first fastening and regulation means (18) ; and
put the seat (19) and the handlebar (22) inside the suitcase.

## Patentansprüche

1. Mehrzweckfahrzeug, das einen elektrischen Antrieb und ein Fahrgestell (1) umfasst, welches zusammengeklappt werden kann, um das Mehrzweckfahrzeug von einem Motorrad in einen motorisierten Gepäcktransportwagen umzuwandeln,
**dadurch gekennzeichnet, dass** es zumindest und jeweils miteinander kombiniert umfasst:
das Fahrgestell (1), das durch einen ersten und einen zweiten Teil (2, 3) hergestellt ist, die durch ein erstes Scharnier (4) miteinander verbunden sind und die durch ein erstes reversibles Befestigungsmittel (5) zusammengefügt gehalten sind;
ein Hinterrad (15), das durch den ersten Teil (2) des Fahrgestells (1) getragen ist und ein Vorderrad (24), das durch den zweiten Teil (3) des Fahrgestells (1) getragen ist;
eine Batteriegruppe (6), die durch ein zweites und ein drittes reversibles Mittel (7, 9) an einem ersten Körper (10), der durch ein zweites Scharnier (20) mit dem ersten Teil (2) des Fahrgestells (1) verbunden ist, bzw. an einem zweiten Körper (11), der mit dem zweiten Teil (3) des Fahrgestells (1) verbunden ist, angebracht ist;
eine Verkleidung (16), die durch den ersten Teil (2) des Fahrgestells (1) getragen ist und in der die Steuermittel einer Elektromaschine platziert sind, welche durch die Batteriegruppe (6) gespeist wird und welche das Hinterrad (15) steuert;
eine Lenkstange (22), die auf reversible Weise an dem Fahrgestell (1) angebracht ist;
einen Sitz (19), der durch den ersten Teil (2) des Fahrgestells (1) gehalten ist;
einen Behälter (12), der einige Bereiche (28) mit einer Konfiguration eines umgekehrten "U" umfasst, der einen Innenraum (13) aufweist und der auf reversible Weise zumindest an der Lenkstange (22) befestigt sein kann.

2. Fahrzeug nach Anspruch 1, **dadurch gekennzeichnet, dass** sich die Elektromaschine in der Hinterradnabe (15) befindet.

3. Fahrzeug nach Anspruch 1, **dadurch gekennzeichnet, dass** das zweite Scharnier (20) mit dem ersten Scharnier (4) fluchtet.

4. Fahrzeug nach Anspruch 1, **dadurch gekennzeichnet, dass** die Batteriegruppe (6) dem Motorrad einen Fahrbereich von etwa 30 km und eine Dauergeschwindigkeit von etwa 18 km/h mit einer Höchstgeschwindigkeit von etwa 25 km/h verleiht.

5. Fahrzeug nach Anspruch 1, **dadurch gekennzeichnet, dass** es eine Batteriegruppe aufweist, die in den Behälter (12) gestellt ist und die in der Lage ist, dem Motorrad eine Kraftstoffreichweite von etwa 30 km zu verleihen.

6. Fahrzeug nach Anspruch 1, **dadurch gekennzeichnet, dass** der erste Teil (5) des Fahrgestells (1) die Fußstützen (14), die Stützen des Hinterrads (15), ein erstes Befestigungs- und Reguliermittel (18) des Sitzrohrs (19), eine erste Stütze (29), mit welcher der erste Körper (10) durch das zweite Scharnier (20) verbunden ist, ein viertes reversibles Befestigungsmittel (8), das den ersten Körper (10) mit der ersten Stütze (29) verbindet, und eine zweite Stütze (21), welche in der Lage ist, die Lenkstange (22) am Ende der Umwandlung des Motorrads in einen Gepäcktransportwagen zu halten, hält.

7. Fahrzeug nach Anspruch 6, **dadurch gekennzeichnet, dass** der erste Teil (2) des Fahrgestells (1) auch die Rückleuchte (17) trägt, die an der Verkleidung (16) montiert ist.

8. Fahrzeug nach Anspruch 1, **dadurch gekennzeichnet, dass** der zweite Teil (3) des Fahrgestells (1) das Rohr (23), welches die Gabelstücke des Vorderrads (24) trägt, den zweiten Körper (11), an dem die Batteriegruppe (6) unter Verwendung des dritten reversiblen Befestigungsmittels (9) befestigt ist, ein zweites Befestigungs- und Reguliermittel (26) der Lenkstange (22) und ein fünftes reversibles Befestigungsmittel (27) des Behälters (12) an der Lenkstange (22) trägt.

9. Fahrzeug nach Anspruch 8, **dadurch gekennzeichnet, dass** der zweite Teil (3) des Fahrgestells (1) auch die Frontleuchte (25) trägt, die mit dem Rohr (23) des Vorderrads (24) verbunden ist.

10. Fahrzeug nach den Ansprüchen 1 und 8, **dadurch gekennzeichnet, dass**, wenn es sich um ein Motorrad handelt:
die Lenkstange (22) auf reversible Weise an dem Rohr (23) des Vorderrads (24) des zweiten Teils (3) des Fahrgestells (1) angebracht ist;
die Bereiche (28) mit der Konfiguration eines umgedrehten "U" des Behälters (12) mit der Achse des Vorderrads (24) verbunden montiert sind.

11. Fahrzeug nach den Ansprüchen 1 und 6, **dadurch gekennzeichnet, dass**, wenn es sich um einen Gepäcktransportwagen handelt:
die Lenkstange (22) auf reversible Weise an der zweiten Stütze (21) des ersten Teils (2) des Fahrgestells (1) angebracht ist;
die Bereiche (28) mit der Konfiguration eines umgedrehten "U" des Behälters (12) an den Fußstützen (14) montiert sind.

12. Fahrzeug nach einem der vorhergehenden Ansprüche, **dadurch gekennzeichnet, dass** es durch zumindest die folgenden Funktionsschritte von einem Motorrad in einen motorisierten Gepäcktransportwagen umgewandelt wird:
Entfernen des Behälters (12) und Rotieren der Lenkstange (22) und des Vorderrads (24) um 90° ;
Öffnen des ersten und vierten reversiblen Befestigungsmittels (5, 8), Rotieren des ersten Teils (2) des Fahrgestells (1) um 90° in Bezug auf den zweiten Teil (3) des Fahrgestells (1) mittels einer Rotation an dem ersten und zweiten Scharnier (4, 20);
Klappen des ersten Teils (2) des Fahrgestells (1) an den zweiten Teil (3) des Fahrgestells (1) durch eine weitere Rotation von 90° an dem ersten Scharnier (4);
Entfernen der Lenkstange (22) von dem Rohr (23) des Vorderrads (24) durch Lösen des zweiten Befestigungs- und Reguliermittels (26) und deren Befestigen an der zweiten Stütze (21) des zweiten Teils (3) des Fahrgestells (1);
Wiederzurückstellen des Behälters (12) in seine Position, Montieren seiner Bereiche (28) mit der Konfiguration eines umgedrehten "U" an den Fußstützen (14) und dessen Befestigen an der Lenkstange (22) unter Verwendung eines fünften reversiblen Befestigungsmittels (27).

13. Fahrzeug nach Anspruch 1, **dadurch gekennzeichnet, dass** dessen Fahrgestell (1) geöffnet werden kann, um den Gepäcktransporter in ein Motorrad umzuwandeln, indem die Funktionsschritte gemäß Anspruch 12 in umgekehrter Reihenfolge ausgeführt werden.

14. Fahrzeug nach einem der vorhergehenden Ansprüche, **dadurch gekennzeichnet, dass** es in der Motorradversion zusammengeklappt wird, um dessen Maße auf diejenigen eines Koffers zu verringern, wobei zumindest die folgenden Funktionsschritte ausgeführt werden:
Entfernen des Behälters (12) und Rotieren der Lenkstange (22) sowie des Vorderrads (24) um 90°;
Öffnen des ersten und vierten reversiblen Befestigungsmittels (5, 8), Rotieren des ersten Teils (2) des Fahrgestells (1) in Bezug auf den zweiten Teil (3) des Fahrgestells (1) um 90° durch eine Rotation an dem ersten und zweiten Scharnier (4, 20);
Klappen des ersten Teils (2) des Fahrgestells (1) an den zweiten Teil (3) des Fahrgestells (1) durch eine weitere Rotation von 90° an dem ersten Scharnier (4);
Entfernen der Lenkstange (22) von dem Rohr (23) des Vorderrads (24), indem das zweite Befestigungs- und Reguliermittel (26) gelöst wird;
Entfernen des Sitzes (19) von dem ersten Teil (2) des Fahrgestells (1) durch Lösen des ersten Befestigungs- und Reguliermittels (18) ; und
Legen des Sitzes (19) und der Lenkstange (22) in den Koffer.

## Revendications

1. Véhicule multifonctionnel comprenant un entraînement électrique et un châssis (1) qui est susceptible d'être plié pour transformer le véhicule multifonctionnel d'un motocycle en chariot de transport de bagage motorisé,
**caractérisé par le fait qu'**il comprend au moins et, combinés les uns aux autres :
le châssis (1), composé par une première et une seconde parties (2, 3) raccordées l'une à l'autre par une première charnière (4) et maintenues unies par des premiers moyens de fixation réversibles (5) ;
une roue arrière (15) portée par la première partie (2) du châssis (1) et une roue avant (24) portée par la seconde partie (3) du châssis (1) ;
un bloc-batterie (6), fixé par des deuxième et troisième moyens réversibles (7, 9) à un premier corps (10) raccordé par une seconde charnière (20) à la première partie (2) du châssis (1), respectivement à un second corps (11) raccordé à la seconde partie (3) du châssis (1) ;
un carénage (16), porté par la première partie (2) du châssis (1), à l'intérieur duquel les moyens de commande d'un moteur électrique sont placés, alimentés par le bloc-batterie (6), qui commande la roue arrière (15) ;
un guidon (22), fixé de manière réversible au châssis (1) ;
un siège (19), maintenu par la première partie (2) du châssis (1) ;
un conteneur (12), comprenant quelques zones (28) présentant une configuration en « U » inversé et présentant un espace interne (13), susceptible d'être fixé de manière réversible à au moins le guidon (22).

2. Véhicule selon la revendication 1, **caractérisé par le fait que** le moteur électrique se situe dans le moyeu de roue arrière (15).

3. Véhicule selon la revendication 1, **caractérisé par le fait que** la seconde charnière (20) est alignée sur la première charnière (4).

4. Véhicule selon la revendication 1, **caractérisé par le fait que** le bloc-batterie (6) donne au motocycle une autonomie d'environ 30 Km et une vitesse de croisière d'environ 18 Km/h avec une vitesse maximale d'environ 25 Km/h.

5. Véhicule selon la revendication 1, **caractérisé par le fait qu'**il comprend un bloc-batterie placé à l'intérieur du conteneur (12) et susceptible de donner au motocycle une distance d'autonomie de carburant d'environ 30 km.

6. Véhicule selon la revendication 1, **caractérisé par le fait que** la première partie (5) du châssis (1) maintient les repose-pieds (14) ; les supports de la roue arrière (15) ; les premiers moyens de fixation et de régulation (18) du tube de siège (19) ; un premier support (29) auquel le premier corps (10) est raccordé par la seconde charnière (20) ; des quatrièmes moyens de fixation réversibles (8) qui raccordent le premier corps (10) au premier support (29) et à un second support (21) susceptibles de maintenir le guidon (22) à la fin de la transformation du motocycle en chariot de transport de bagage.

7. Véhicule selon la revendication 6, **caractérisé par le fait que** la première partie (2) du châssis (1) porte également le feu arrière (17) monté sur le carénage (16).

8. Véhicule selon la revendication 1, **caractérisé par le fait que** la seconde partie (3) du châssis (1) porte le tube (23) qui porte les fourches de roue avant (24) ; le second corps (11) auquel le bloc-batterie (6) est fixé en utilisant des troisièmes moyens de fixation réversibles (9) ; des deuxièmes moyens de fixation et de régulation (26) du guidon (22) et des cinquièmes moyens de fixation réversibles (27) du conteneur (12) au guidon (22).

9. Véhicule selon la revendication 8, **caractérisé par le fait que** la seconde partie (3) du châssis (1) porte également le feu avant (25) raccordé au tube (23) de la roue avant (24).

10. Véhicule selon l'une quelconque des revendications 1 à 8, **caractérisé par le fait que**, lorsqu'il s'agit d'un motocycle :
le guidon (22) est fixé de manière réversible au tube (23) de la roue avant (24) de la seconde partie (3) du châssis (1) ;
les zones (28) dotées d'une configuration en « U » inversé du conteneur (12) sont montées en étant raccordées à l'essieu de roue avant (24).

11. Véhicule selon l'une quelconque des revendications 1 à 6, **caractérisé par le fait que**, lorsqu'il est en chariot de transport de bagage :
le guidon (22) est fixé de manière réversible au second support (21) de la première partie (2) du châssis (1) ;
les zones (28) dotées d'une configuration en « U » inversé du conteneur (12) sont montées sur les repose-pieds (14).

12. Véhicule selon l'une quelconque des revendications précédentes, **caractérisé par le fait qu'**il est transformé de motocycle en chariot de transport de bagage motorisé par au moins les étapes fonctionnelles suivantes consistant à :
retirer le conteneur (12) et amener en rotation le guidon (22) et la roue avant (24) de 90° ;
ouvrir les premiers et quatrièmes moyens de fixation réversibles (5, 8), amener en rotation de 90° la première partie (2) du châssis (1) par rapport à la seconde partie (3) du châssis (1) au moyen d'une rotation sur la première et la seconde charnières (4, 20) ;
plier la première partie (2) du châssis (1) sur la seconde partie (3) du châssis (1) par une autre rotation de 90° sur la première charnière (4) ;
retirer le guidon (22) du tube (23) de la roue avant (24) en desserrant les deuxièmes moyens de fixation et de régulation (26) et le fixer au second support (21) de la seconde partie (3) du châssis (1) ;
replacer le conteneur (12) à sa place, en montant sur les repose-pieds (14) ses zones (28) dotées d'une configuration en "U" inversé et en le fixant au guidon (22) en utilisant des cinquièmes moyens de fixation réversibles (27).

13. Véhicule selon la revendication 1, **caractérisé par le fait que** son châssis (1) est susceptible d'être ouvert pour convertir le porte-bagage en motocycle en réalisant dans l'ordre opposé les étapes fonctionnelles comme selon la revendication 12.

14. Véhicule selon l'une quelconque des revendications précédentes, **caractérisé par le fait que** dans la version motocycle, il est plié pour réduire ses dimensions à celles d'une valise en réalisant au moins les étapes fonctionnelles suivantes :
retirer le conteneur (12) et amener en rotation le guidon (22) et la roue avant (24) de 90° ;
ouvrir les premier et quatrième moyens de fixation réversibles (5, 8), amener en rotation de 90° la première partie (2) du châssis (1) par rapport à la seconde partie (3) du châssis (1) par une rotation sur la première et la seconde charnières (4, 20) ;
plier la première partie (2) du châssis (1) sur la seconde partie (3) du châssis (1) par une autre rotation de 90° sur la première charnière (4) ;
retirer le guidon (22) du tube (23) de la roue avant (24) en desserrant les deuxièmes moyens de fixation et de régulation (26) ;
retirer le siège (19) de la première partie (2) du châssis (1) en desserrant les premiers moyens de fixation et de régulation (18) ; et
placer le siège (19) et le guidon (22) à l'intérieur de la valise.
